# EUROPÄISCHE PATENTANMELDUNG

(11) **EP 1 365 148 A2**
(43) Veröffentlichungstag der Anmeldung: **26.11.2003**
(21) Anmeldenummer: 03011684.2
(22) Anmeldetag: 23.05.2003
(51) Int. Cl.: F03D 11/00, F03D 7/02

(54) **Drehantriebschmiersystem für ein Maschinenhaus einer Windenergieanlage**

(30) Priorität: 24.05.2002 DE 20208134 U
(71) Anmelder: AB SKF, S-415 50 Göteborg (SE)
(72) Erfinder: Kottwitz, Bernd, 66346 Püttlingen (DE); Löser, Norbert, 66346 Püttlingen (DE); Liesegang, Hans-Jürgen, 26419 Schortens (DE)
(74) Vertreter: Gosdin, Michael

(57) **Zusammenfassung**

Die Erfindung betrifft einen Drehantrieb für ein Maschinenhaus (1) einer Windenergieanlage. Das Maschinenhaus (1) ist mittels eines Lagers relativ zu einem ortsfesten Fundament (2) drehbar gelagert. Das Lager weist einen ersten Lagerring (5) auf, der drehfest mit dem Fundament (2) verbunden ist und einen zweiten Lagerring (13), der drehfest mit dem Maschinenhaus (1) verbunden ist. Dabei weist einer der beiden Lagerringe (5, 15) eine Verzahnung (29) auf, in die wenigstens ein Ritzel (32) zum Antreiben oder zum Arretieren des Maschinenhauses (1) eingreift. Die Besonderheit des erfmdungsgemäßen Drehantriebs besteht darin, dass im Bereich des Eingriffs des Ritzels (32) in die Verzahnung (29) ein Schmierstoff vorgehalten wird und dass in diesem Bereich eine Abdeckung (34) angeordnet ist, die das Ritzel (32) wenigstens bereichsweise umschließt und gegen die Umgebung abdichtet.

## Beschreibung

Die Erfindung betrifft einen Drehantrieb für ein Maschinenhaus einer Windenergieanlage.

Aus der DE 100 12 773 A1 ist es bekannt, ein Maschinenhaus einer Windenergieanlage mit einer Drehverbindung drehbar zu lagern. Der Außenrand des Außenrings der Drehverbindung besitzt eine Verzahnung, in die Ritzel eines Drehantriebs eingreifen. In der DE 100 12 773 A1 ist nicht offenbart, ob im Bereich des Eingriffs der Ritzel in die Verzahnung ein Schmiermittel vorgehalten wird. Ohne ein solches Schmiermittel besteht die Gefahr, eines schnellen Verschleißes der Ritzel und der Verzahnung des Außenrings. Wird dagegen ein Schmiermittel vorgehalten, so wird dieses bei einer üblichen Bauart der Windenergieanlage, bei der das Maschinenhaus auf einem Turm angeordnet ist, im Laufe der Zeit die Außenwand des Turmes verschmutzen.

Der Erfindung liegt die Aufgabe zugrunde, einen Drehantrieb für ein Maschinenhaus für eine Windenergieanlage so weiterzubilden, dass über einen möglichst großen Zeitraum ein störungsfreier Betrieb möglich ist.

Diese Aufgabe wird durch die Merkmalskombination des Anspruchs 1 gelöst.

Der erfindungsgemäße Drehantrieb ist für ein Maschinenhaus einer Windenergieanlage ausgelegt, wobei das Maschinenhaus mittels eines Lagers relativ zu einem ortsfesten Fundament drehbar gelagert ist. Das Lager weist einen ersten Lagerring auf, der drehfest mit dem Fundament verbunden ist und einen zweiten Lagerring, der drehfest mit dem Maschinenhaus verbunden ist. Einer der beiden Lagerringe weist eine Verzahnung auf, in die wenigstens ein Ritzel zum Antreiben oder Arretieren des Maschinenhauses eingreift. Im Bereich des Eingriff des Ritzels in die Verzahnung wird ein Schmierstoff vorgehalten. Weiterhin ist in diesem Bereich eine Abdeckung angeordnet, die das Ritzel wenigstens bereichsweise umschließt und gegen die Umgebung abdichtet. Der erfindungsgemäße Drehantrieb hat den Vorteil, dass ein Verlust von Schmierstoff verhindert bzw. reduziert wird. Weiterhin wird das Eindringen von Fremdstoffen in den Bereich, in dem der Schmierstoff vorgehalten wird, erschwert und somit einer Verschmutzung des Schmierstoffs entgegengewirkt.

Die Abdeckung kann die Verzahnung des ersten Lagerrings oder des zweiten Lagerrings wenigstens bereichsweise umschließen. Dies hat neben einer noch effizienteren Zurückhaltung des Schmierstoffs bzw. der Verhinderung einer Verschmutzung des Schmierstoffs den Vorteil, dass die Verzahnung gegen Korrosion geschützt wird.

Im Bereich jedes Ritzels kann die Abdeckung eine Öffnung aufweisen, durch die hindurch das Ritzel in die Verzahnung eingreift. Vorzugsweise ist die Abdeckung mit dem Maschinenhaus drehfest verbunden. Zwischen der Abdeckung und dem Lagerring, der die Verzahnung aufweist, kann wenigstens ein Spalt ausgebildet sein. Dadurch wird eine Drehbewegung zugelassen und trotz eines Verzichts auf reibende Dichtungen eine ausreichende Dichtwirkung erzielt.

Im Bereich ihres Bodens kann die Abdeckung zur Aufnahme von Schmierstoff wannenförmig ausgebildet sein. Dies hat den Vorteil, dass ein gewisser Schmierstoffvorrat von der Abdeckung aufgenommen werden kann und weiterhin für die Schmierung des Ritzels und der Verzahnung verwendet werden kann.

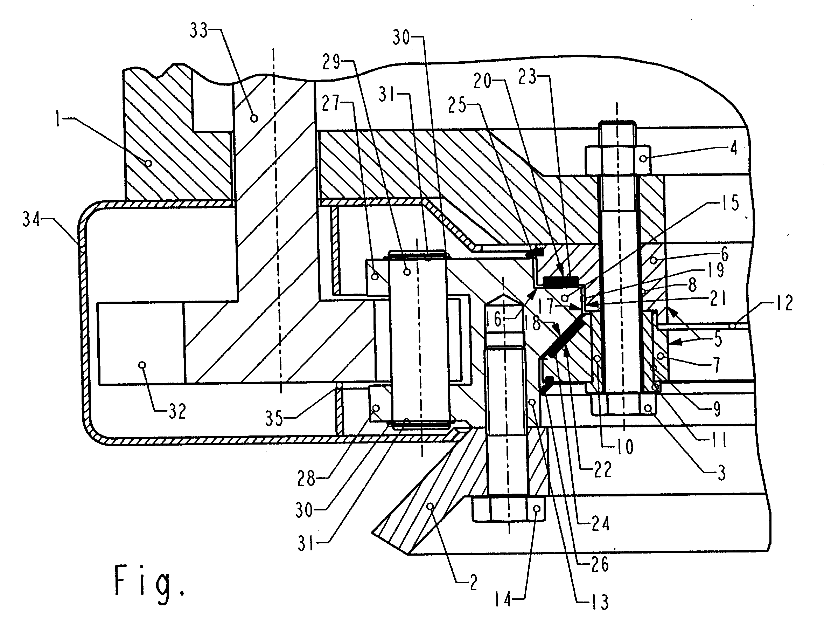

Die Erfindung wird nachstehend anhand des in der Zeichnung dargestellten Ausführungsbeispiels erläutert.

Die einzige Figur zeigt ein Ausführungsbeispiel des erfindungsgemäßen Drehantriebs in Schnittdarstellung.

Mittels des erfindungsgemäßen Drehantriebs wird ein Maschinenhaus 1 einer Windenergieanlage, das sich über ein Gleitlager auf einem Turm 2 drehbar abstützt, relativ zum Turm 2 verdreht. Das Maschinenhaus 1 ist mittels Verbindungsschrauben 3 und Muttern 4 an einem Innenring 5 angeschraubt. Der Innenring 5 besteht aus einem ersten Ringteil 6 und einem zweiten Ringteil 7, die in Axialrichtung nebeneinander angeordnet sind und ebenfalls durch die Verbindungsschrauben 3 und Muttern 4 zusammengehalten werden. Hierzu sind die Verbindungsschrauben 3 durch entsprechende Durchgangsbohrungen 8 und 9 in den Ringteilen 6 und 7 geführt. Dabei weisen die Durchgangsbohrungen 9 im zweiten Ringteil 7 jeweils einen größeren Durchmesser als die Durchgangsbohrungen 8 im ersten Ringteil 6 aus. In die Durchgangsbohrungen 9 sind jeweils Buchsen 10 eingeführt, die an einem axialen Ende einen umlaufenden Kragen 11 aufweisen, der axial am zweiten Ringteil 7 anliegt. Das andere axiale Ende der Buchse 10 stützt sich jeweils axial am ersten Ringteil 6 ab, so dass abhängig von der Länge der Buchsen 10 ein axialer Spalt 12 zwischen dem ersten Ringteil 6 und dem zweiten Ringteil 7 ausgebildet wird.

Ein Außenring 13 ist über Schrauben 14 am Turm 2 befestigt. Der Außenring 13 weist einen umlaufenden Radialvorsprung 15 auf, der radial nach innen gerichtet ist. Der Radialvorsprung 15 weist eine senkrecht zur Axialrichtung des Gleitlagers orientierte Axialfläche 16, eine senkrecht zur Radialrichtung des Gleitlagers orientierte Radialfläche 17 und eine Kegelstumpffläche 18 auf, deren Mittelachse parallel zur Axialrichtung des Gleitlagers verläuft. Sämtliche Flächen verlaufen rotationssymmetrisch um die Achse des Gleitlagers. Der Radialvorsprung 15 greift in einen zwischen den Ringteilen 6 und 7 ausgebildeten Ringraum 19 ein, der von den Flächen 16, 17 und 18 gegenüberliegenden und komplementär dazu ausgebildeten Flächen 20, 21 und 22 begrenzt wird. Die Flächen 20 und 22 sind jeweils etwas zurückversetzt, so dass Vertiefungen zur Aufnahme von Gleitsegmenten 23 und 24 entstehen. Die Gleitsegmente 23 und 24 können beispielsweise auf die Flächen 20 und 22 aufgeklebt sein und stehen im gleitenden Kontakt zu der Axialfläche 16 und der Kegelstumpffläche 18. Dabei nimmt die Gleitpaarung bestehend aus den Gleitsegmenten 23 und der Axialfläche 16 im wesentlichen das Gewicht des Maschinenhauses 1 auf und die Gleitpaarung bestehend aus den Gleitsegmenten 24 und der Kegelstumpffläche 18 sichert das Maschinenhaus 1 gegen Kippen. Das Spiel in den beiden Gleitpaarungen hängt davon ab, wie stark das erste Ringteil 6 und das zweite Ringteil 7 des Innenrings 5 mit Hilfe der Verbindungsschrauben 3 einander angenähert sind. Da diese Annäherung durch die Buchsen 10 begrenzt wird, kann das Spiel über die Länge der Buchsen 10 vorgegeben bzw. eingestellt werden.

Um einen Austritt von gegebenenfalls im Bereich der Gleitsegmente 23 und 24 eingebrachten Schmierstoff zu verhindern, ist zwischen dem ersten Ringteil 6 und dem Außenring 13 eine erste Dichtung 25 angeordnet und zwischen dem zweiten Ringteil 7 und dem Außenring 13 eine zweite Dichtung 26.

Damit das Maschinenhaus 1 relativ zum Turm 2 geschwenkt werden kann, ist der Außenring 13 mit einer Triebstockverzahnung versehen. Hierzu weist der Außenring 13 einen U-förmigen Querschnitt auf, wobei das U radial nach außen geöffnet ist. Die beiden Schenkel 27 und 28 sind mit koaxialen Durchgangsbohrungen versehen, in die jeweils ein Triebstockbolzen 29 eingeführt ist. Die Triebstockbolzen 29 sind beidseitig axial durch je einen Seeger-Ring 30 gesichert, der in eine Nut 31 des Triebstockbolzens 29 eingreift. Die unteren Seeger-Ringe 30 können dabei gegebenenfalls auch entfallen, da die Triebstockbolzen 29 bereits durch ihr Gewicht gesichert sind. In die Triebstockbolzen 29 greift ein Ritzel 32 ein, das über eine Welle 33 angetrieben wird. Dabei können auch mehrere Ritzel 32 über den Umfang verteilt angeordnet sein. Der Bereich des Triebstocks und des Ritzels 32 bzw. der Ritzel 32 ist von einer Abdeckung 34 umschlossen, die am Maschinenhaus 1 befestigt ist und jeweils bis auf einen kleinen Spalt an den Außenring 13 heranreicht. Im Bereich des Ritzels 32 bzw. der Ritzel 32 ist in der Abdeckung 34 jeweils eine Öffnung 35 vorgesehen, durch die hindurch das Ritzel 32 jeweils in die Triebstockverzahnung eingreifen kann. Die Abdeckung 34 dient dazu, den im Bereich der Triebstockverzahnung vorgehaltenen Schmierstoff zurückzuhalten und so einem Schmierstoffverlust und einer Verschmutzung der umgebenden Maschinenteile vorzubeugen. Hierzu ist die Abdeckung 34 im Bereich ihres Bodens wannenförmig ausgebildet, um gegebenenfalls heruntertropfenden Schmierstoff aufzufangen. Weiterhin verhindert die Abdeckung 34 eine Verunreinigung des Schmierstoffs durch von außen eindringende Fremdstoffe.

Prinzipiell ist es auch möglich, die Abdeckung 34 auf den Bereich des Eingriffs des Ritzels 32 bzw. der Ritzel 32 in die Triebstockbolzen 29 zu begrenzen, d. h. nur diesen Bereich von der Abdeckung 34 zu umschließen. In diesem Fall müssen aber in der Regel ein gewisser Verlust und eine gewisse Verschmutzung des Schmierstoffs in Kauf genommen werden.

### Bezugszeichen

- 1: Maschinenhaus
- 2: Turm
- 3: Verbindungsschraube
- 4: Mutter
- 5: Innenring
- 6: erstes Ringteil (Innenring 5)
- 7: zweites Ringteil (Innenring 5)
- 8: Durchgangsbohrung (erstes Ringteil 6)
- 9: Durchgangsbohrung (zweites Ringteil 7)
- 10: Buchse
- 11: Kragen
- 12: Spalt
- 13: Außenring
- 14: Schraube
- 15: Radialvorsprung (Außenring 13)
- 16: Axialfläche (Außenring 13)
- 17: Radialfläche (Außenring 13)
- 18: Kegelstumpffläche (Außenring 13)
- 19: Ringraum
- 20: Axialfläche (erstes Ringteil 6)
- 21: Radialfläche (erstes Ringteil 6)
- 22: Kegelstumpffläche (zweites Ringteil 7)
- 23: Gleitsegment
- 24: Gleitsegment
- 25: Dichtung
- 26: Dichtung
- 27: erster Schenkel (Außenring 13)
- 28: zweiter Schenkel (Außenring 13)
- 29: Triebstockbolzen
- 30: Seeger-Ring
- 31: Nut (Triebstockbolzen 29)
- 32: Ritzel
- 33: Welle
- 34: Abdeckung
- 35: Öffnung

## Patentansprüche

1. Drehantrieb für ein Maschinenhaus (1) einer Windenergieanlage, wobei das Maschinenhaus (1) mittels eines Lagers relativ zu einem ortsfesten Fundament (2) drehbar gelagert ist, das Lager einen ersten Lagerring (5) aufweist, der drehfest mit dem Fundament (2) verbunden ist und einen zweiten Lagerring (13), der drehfest mit dem Maschinenhaus (1) verbunden ist, wobei einer der beiden Lagerringe (5, 13) eine Verzahnung (29) aufweist, in die wenigstens ein Ritzel (32) zum Antreiben oder zum Arretieren des Maschinenhauses (1) eingreift, **dadurch gekennzeichnet, dass** im Bereich des Eingriffs des Ritzels (32) in die Verzahnung (29) ein Schmierstoff vorgehalten wird und dass in diesem Bereich eine Abdeckung (34) angeordnet ist, die das Ritzel (32) wenigstens bereichsweise umschließt und gegen die Umgebung abdichtet.

2. Drehantrieb nach Anspruch 1, **dadurch gekennzeichnet, dass** die Abdeckung (34) die Verzahnung (29) des ersten Lagerrings (5) oder des zweiten Lagerings (13) wenigstens bereichsweise umschließt.

3. Drehantrieb nach einem der vorhergehenden Ansprüche, **dadurch gekennzeichnet, dass** die Abdeckung (34) im Bereich jedes Ritzels (34) eine Öffnung (35) aufweist, durch die hindurch das Ritzel (34) in die Verzahnung (29) eingreift.

4. Drehantrieb nach einem der vorhergehenden Ansprüche, **dadurch gekennzeichnet, dass** die Abdeckung (34) mit dem Maschinenhaus (1) drehfest verbunden ist.

5. Drehantrieb nach einem der vorhergehenden Ansprüche, **dadurch gekennzeichnet, dass** zwischen der Abdeckung (34) und dem Lagerring (13), der die Verzahnung (29) aufweist, wenigstens ein Spalt ausgebildet ist.

6. Drehantrieb nach einem der vorhergehenden Ansprüche, **dadurch gekennzeichnet, dass** die Abdeckung (34) im Bereich ihres Bodens zur Aufnahme von Schmierstoff wannenförmig ausgebildet ist.
